# EUROPÄISCHE PATENTANMELDUNG

(11) **EP 0 713 903 A1**
(43) Veröffentlichungstag der Anmeldung: **29.05.1996**
(21) Anmeldenummer: 95118127.0
(22) Anmeldetag: 17.11.1995
(51) Int. Cl.: C09B 67/22, C09D 11/00

(54) **Farbstoffpräparationen**

(30) Priorität: 25.11.1994 DE 4441960
(71) Anmelder: BASF AKTIENGESELLSCHAFT, D-67056 Ludwigshafen (DE)
(72) Erfinder: Bellaire, Helmut, D-67069 Ludwigshafen (DE); Kurtz, Walter, Dr., D-67098 Bad Dürkheim (DE)

(57) **Zusammenfassung**

Farbstoffpräparationen, enthaltend mindestens einen roten Reaktivfarbstoff, mindestens einen blauen Reaktivfarbstoff sowie Polyethylenimin mit einem mittleren Molekulargewicht von 1.000 bis 10.000.000, ihre Verwendung zur Herstellung von Aufzeichnungsflüssigkeiten für das Ink-Jet-Verfahren sowie Aufzeichnungsflüssigkeiten für das Ink-Jet-Verfahren, enthaltend diese Farbstoffpräparationen.

## Beschreibung

Die vorliegende Erfindung betrifft neue Farbstoffpräparationen, enthaltend mindestens einen roten Reaktivfarbstoff, mindestens einen blauen Reaktivfarbstoff sowie Polyethylenimin mit einem mittleren Molekulargewicht von 1.000 bis 10.000.000, ihre Verwendung zur Herstellung von Aufzeichnungsflüssigkeiten für das Ink-Jet-Verfahren sowie Aufzeichnungsflüssigkeiten für das Ink-Jet-Verfahren, enthaltend diese Farbstoffpräparationen.

Beim Ink-Jet-Verfahren (Tintenstrahldruck-Verfahren) verwendet man üblicherweise wäßrige Tinten, die in kleinen Tröpfchen direkt auf das Substrat gesprüht werden. Man unterscheidet dabei ein kontinuierliches Verfahren, bei dem die Tinte gleichmäßig durch eine Düse gepreßt und durch ein elektrisches Feld, abhängig vom zu druckenden Muster, auf das Papier oder in einen Farbfänger gelenkt wird, und ein unterbrochenes Tintenstrahl- oder "Drop-on-Demand"-Verfahren, bei dem der Tintenausstoß nur dort erfolgt, wo ein farbiger Punkt gesetzt werden soll. Bei dem letztgenannten Verfahren wird über einen piezoelektrischen Kristall oder eine beheizte Kanüle (Bubble- oder Thermo-Jet-Verfahren) Druck auf das Tintensystem ausgeübt und so ein Tintentropfen herausgeschleuert. Solche Verfahrensweisen sind in Text. Chem. Color, Band 19 (8), Seiten 23 bis 29, 1987 und Band 21 (6), Seiten 27 bis 32, 1989, beschrieben.

In Ink-Jet-Verfahren kommen in der Regel wasserlösliche Farbstoffe zur Anwendung. Dabei stellt die mangelnde Wasserechtheit von mit wasserlöslichen Farbstoffen bedrucktem Papier ein Problem dar. Insbesondere magentafarbene Tintenstrahldrucke sind bislang mit dem Nachteil einer ungenügenden Wasserechtheit behaftet.

Aufgabe der vorliegenden Erfindung war es nun, neue Farbstoffpräparationen bereitzustellen, die sich vorteilhaft zur Herstellung von Aufzeichnungsflüssigkeiten (Tinten) für das Ink-Jet-Verfahren eignen. Die resultierenden Tinten sollten unter Anwendung des Ink-Jet-Verfahrens oder einer anderen Minimalauftragssprühtechnik auf Papier Drucke mit hoher Wasserechtheit und Wassertropfenechtheit liefern.

Demgemäß wurden die eingangs näher bezeichnete Farbstoffpräparationen gefunden.

Geeignete rote oder blaue Reaktivfarbstoffe weisen in der Regel 1 bis 4 faserreaktive Reste der aliphatischen oder heterocyclischen Reihe sowie 1 bis 6 Carboxyl- und/oder Sulfonsäuregruppen auf.

Solche Farbstoffe sind an sich bekannt und zahlreich in der Literatur beschrieben. Die Farbstoffe können den verschiedensten Klassen angehören, z.B. der Klasse der Monoazo-, Disazo- oder Polyazofarbstoffe, der Metallkomplex-Azofarbstoffe, wie 1:1-Kupfer-, 1:2-Chrom oder 1:2-Kobaltkomplex-Monoazo- oder -Disazofarbstoffe, der Anthrachinonfarbstoffe, der Kupfer- oder Kobaltphthalocyaninfarbstoffe, der Kupferformazanfarbstoffe oder der Azomethin-, Nitroaryl-, Dioxazin-, Triphendioxazin-, Phenazin- oder Stilbenfarbstoffe.

Insbesondere sind Azo- oder Anthrachinonfarbstoffe zu nennen.

Bei den Azofarbstoffen sind Mono- oder Disazofarbstoffe, die auch metallisiert sein können, hervorzuheben.

Wichtige Azofarbstoffe sind z.B. solche, deren Diazokomponente sich von einem Anilin- oder Aminonaphthalin ableitet.

Wichtige Azofarbstoffe sind weiterhin z.B. solche, deren Kupplungskomponente sich von einem Anilin, Naphthalin, Pyrazolon, Aminopyrazol, Diaminopyridin, Pyridon oder Acylacetarylid ableitet.

Zu nennen sind beispielsweise metallfreie oder metallisierte (Metallkomplexe) Azofarbstoffe aus der Phenyl-azo-naphthalin-, Phenyl-azo-1-phenylpyrazol-5-on-, Phenyl-azo-benzol-, Naphthyl-azo-benzol-, Phenyl-azo-aminonaphthalin-, Naphthyl-azo-naphthalin-, Naphthyl-azo-1-phenylpyrazol-5-on-, Phenyl-azo-pyridon-, Phenyl-azo-aminopyridin-, Naphthyl-azo-pyridon-, Naphthyl-azo-aminopyridin- oder Stilbyl-azo-benzolreihe, wobei Farbstoffe der Phenyl-azo-naphthalinreihe hervorzuheben sind.

Wichtige Anthrachinonfarbstoffe sind z.B. solche, die aus der Klasse der 1,4-Diamino-2-hydroxysulfonylanthrachinone stammen.

Unter faserreaktiven Resten versteht man eine Gruppe, die mit den Hydroxygruppen der Cellulose unter Bildung kovalenter chemischer Bindungen zu reagieren vermag. Der faserreaktive Rest kann direkt oder über ein Brückenglied an den Farbstoffrest gebunden sein; vorzugsweise ist er direkt, über eine gegebenenfalls monoalkylierte Aminogruppe oder über einen aliphatischen Rest an den Farbstoffrest gebunden.

Heterocyclische Ankerreste sind z.B. halogensubstituierte Reste von 1,3,5-Triazin, Chinoxalin, Phthalazin, Pyrimidin oder Pyridazon, oder der 2-Alkylsulfonylbenzthiazolrest.

Beispielhaft seien folgende heterocyclische Reste genannt: 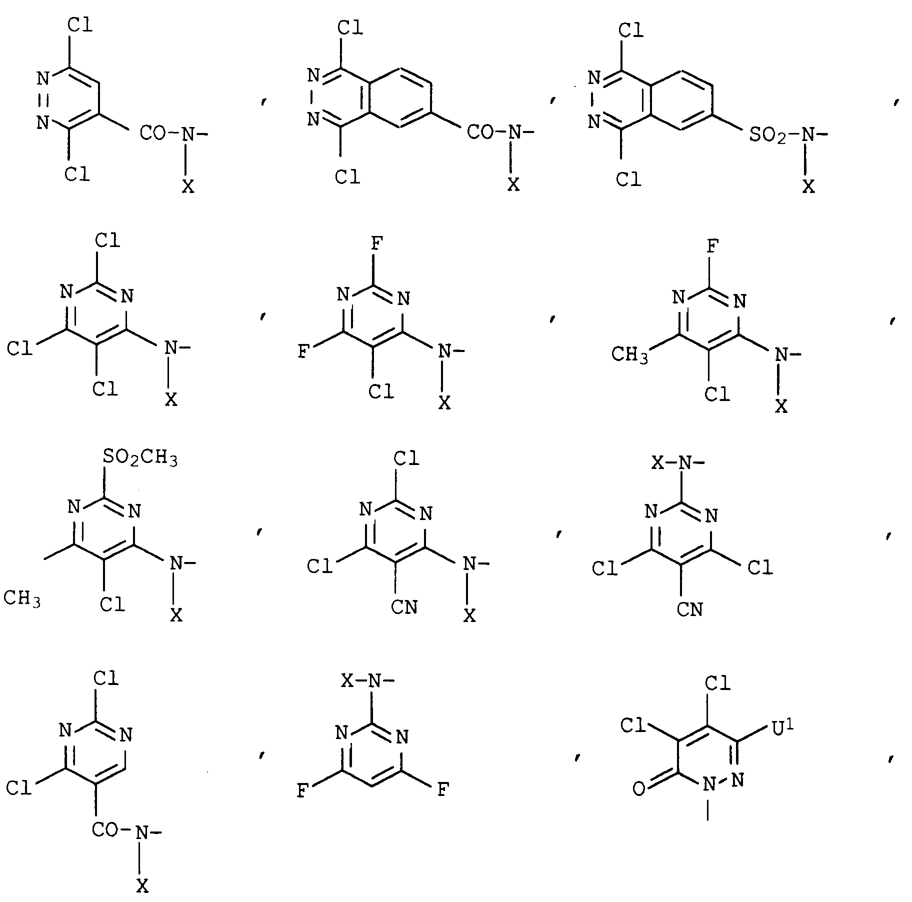 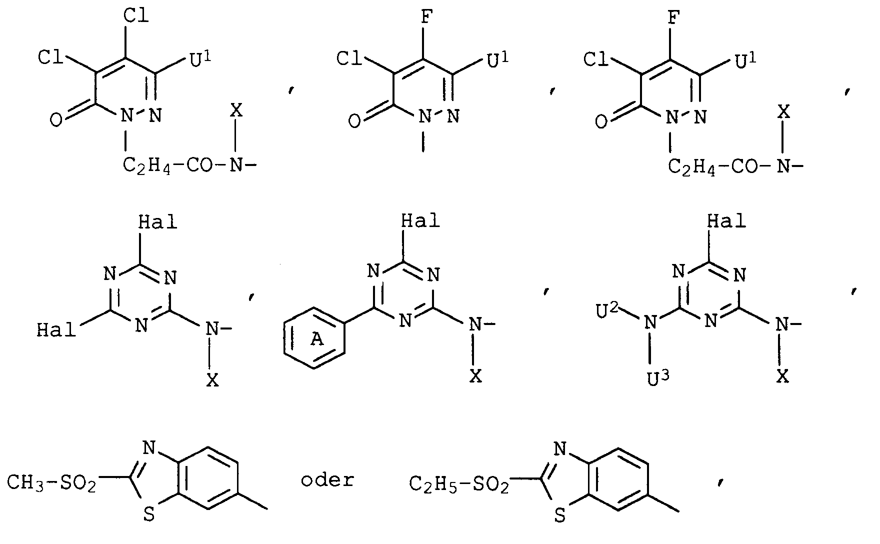
worin
- X: Wasserstoff oder C₁-C₄-Alkyl,
- Hal: Fluor oder Chlor,
- U¹: Wasserstoff oder Nitro und
- U² und U³: unabhängig voneinander jeweils Wasserstoff, C₁-C₆-Alkyl, das gegebenenfalls durch Hydroxy, Halogen, Cyano, Hydroxysulfonyl oder einen Rest der Formel -SO₂-Y, worin Y für Vinyl, oder einen Rest der Formel C₂H₄-Q steht, wobei Q die Bedeutung einer unter alkalischen Reaktionsbedingungen abspaltbare Gruppe besitzt, substituiert ist und jeweils durch 1 oder 2 Sauerstoffatome in Etherfunktion, Imino- oder C₁-C₄-Alkyliminogruppen unterbrochen sein kann, oder U² und U³ zusammen mit dem sie verbindenden Stickstoffatom, Pyrrolidianyl, Piperidinyl, Morpholinyl, Piperazinyl oder N-(C₁-C₄-Alkyl)piperazinyl oder U² auch einen Rest der Formel 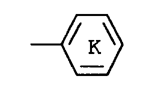 bedeuten,

wobei die Ringe A und K jeweils ein- oder zweifach durch Hydroxy-sulfonyl substituiert und benzoanelliert sein können und der Ring K davon unabhängig ein- oder zweifach durch Chlor, Nitro, C₁-C₄-Alkyl, C₁-C₄-Alkoxy, Cyano, Carboxyl, Acetylamino, Hydroxysulfonylmethyl oder einen Rest der Formel CH₂-SO₂-Y, SO₂-Y, NH-CO-Y oder NU²-CO-NU²-Z-SO₂-Y, worin Y und U² jeweils die obengenannte Bedeutung besitzen und Z für C₂-C₆-Alkylen, das gegebenenfalls durch Hydroxy, Chlor, Cyano, Carboxyl, C₁-C₄-Alkoxycarbonyl, C₁-C₄-Alkanoyloxy oder Sulfato substituiert ist und durch jeweils 1 oder 2 Sauerstoffatome in Etherfunktion oder Imino- oder C₁-C₄-Alkyliminogruppen unterbrochen sein kann, steht, substituiert sein kann.

Ankerreste aus der aliphatischen Reihe sind beispielsweise Acryloyl-, Mono-, Di- oder Trichloracryloyl, Mono-, Di- oder Tribromacryloyl, -CO-CCl=CH-COOH, -CO-CH=CCl-COOH, 2-Chlorpropionyl, 1,2-Dichlorpropionyl, 1,2-Dibrompropionyl, 3-Phenylsulfonylpropionyl, 3-Methylsulfonylpropionyl, 2-Sulfatoethylaminosulfonyl, 2-Fluor-2-chlor-3,3-difluorcyclobut-1-ylcarbonyl, 2,2,3,3-Tetrafluorcyclobut-1-ylcarbonyl, 2,2,3,3-Tetrafluorcyclobut-1-ylsulfonyl, 2-(2,2,3,3-Tetrafluorcyclobut-1-yl)acryloyl, 1- oder 2-Alkyl- oder -Arylsulfonylacryloyl, wie 1- oder 2-Methylsulfonylacryloyl, oder ein Rest der Formel SO₂-Y, CONH-W-SO₂-Y oder NHCONH-W-SO₂-Y, worin W für C₁-C₄-Alkylen oder Phenylen steht und Y jeweils die obengenannte Bedeutung besitzt.

Der Rest Q steht für eine unter alkalischen Reaktionsbedingungen abspaltbare Gruppe. Solche Gruppen sind z.B. Chlor, Brom, C₁-C₄-Alkylsulfonyl, Phenylsulfonyl, OSO₃H, SSO₃H, OP(O)(OH)₂, C₁-C₄-Alkylsulfonyloxy, gegebenenfalls substituiertes Phenylsulfonyloxy, C₁-C₄-Alkanoyloxy, C₁-C₄-Dialkylamino oder ein Rest der Formel 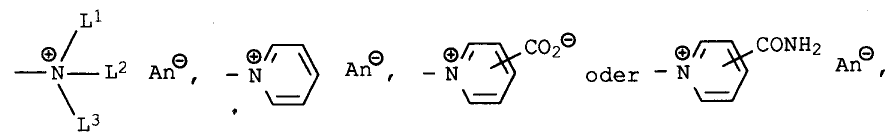
wobei L¹, L² und L³ unabhängig voneinander jeweils die Bedeutung von C₁-C₄-Alkyl oder Benzyl und An^{⊖} jeweils die Bedeutung eines Äquivalents eines Anions besitzen. Als Anionen können dabei z.B. Fluorid, Chlorid, Bromid, Iodid, Mono-, Di- oder Trichloracetat, Methansulfonat, Benzolsulfonat oder 2- oder 4-Methylbenzolsulfonat in Betracht kommen.

Bevorzugt sind Farbstoffpräparationen, die mindestens einen roten Reaktivfarbstoff aus der Reihe der Azofarbstoffe mit mindestens einen blauen Reaktorfarbstoff aus der Reihe der Anthrachinonfarbstoffe enthalten.

Besonders bevorzugt sind Farbstoffpräparationen, die als roten Reaktivfarbstoff den Azofarbstoff der Formel I 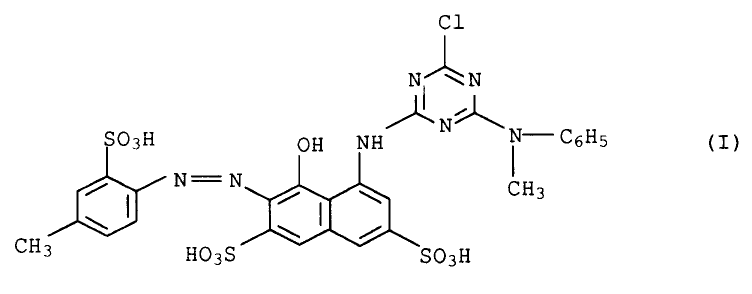
enthalten.

Weiterhin besonders bevorzugt sind Farbstoffpräparationen, die als blauen Reaktivfarbstoff den Anthrachinonfarbstoff der Formel II 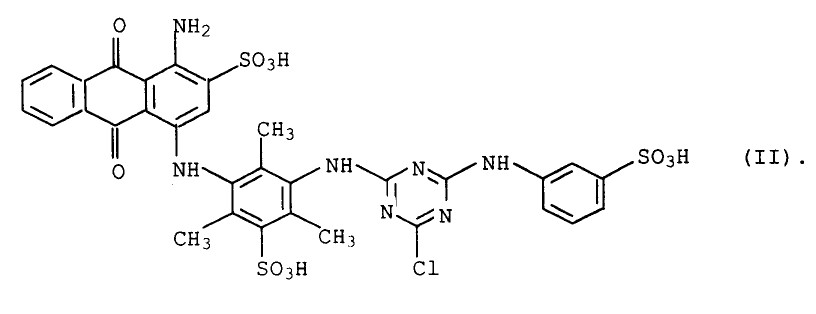
enthalten.

Die erfindungsgemäßen Farbstoffpräparationen enthalten weiterhin Polyethylenimin mit einem mittleren Molekulargewicht von 1.000 bis 10.000.000. Dabei handelt es sich um handelsübliche Produkte.

Polyethylenimin kommt in der Regel als ca. 48 bis 52 Gew.-% wäßrige Lösung oder auch in Substanz zur Anwendung.

Bevorzugt wird Polyethylenimin mit einem mittleren Molekulargewicht von 1.500 bis 3.000, insbesondere ca. 2.000 (Viskositätsbestimmung bei 20°C nach DIN 53019 (Brookfield): 1.000 bis 2.000 mPa·s), mit einem mittleren Molekulargewicht von 20.000 bis 25.000 (Viskositätsbestimmung bei 20°C nach DIN 53 019 (Brookfield): 100.000 bis 250.000 mPa·s) oder mit einem mittleren Molekulargewicht von 600.000 bis 1.000.000 (Viskositätsbestimmung bei 20°C nach DIN 53019 (Brookfield): 18.000 bis 40.000 mPa·s) verwendet.

Bevorzugt sind Farbstoffpräparationen, enthaltend 80 bis 96 Gew.-Teile mindestens eines roten Reaktivfarbstoffs, 3 bis 8 Gew.-Teile mindestens eines blauen Reaktivfarbstoffs sowie 1 bis 30 Gew.-Teile Polyethylenimin.

Besonders bevorzugt sind Farbstoffpräparationen, enthaltend 84 bis 94 Gew.-Teile, insbesondere 88 bis 92 Gew.-Teile, des Farbstoffs der Formel I, 3,5 bis 6 Gew.-Teile, insbesondere 4 bis 5,5 Gew.-Teile, des Farbstoffs der Formel II sowie 2 bis 20 Gew.-Teile, insbesondere 3 bis 15 Gew.-Teile, Polyethylenimin.

Die erfindungsgemäßen Farbstoffpräparationen können durch Mischen der oben beschriebenen Komponenten erhalten werden. Sie eignen sich in vorteilhafter Weise zur Herstellung von Aufzeichnungsflüssigkeiten für das Ink-Jet-Verfahren.

Ein weiterer Gegenstand der vorliegenden Anmeldung sind daher Aufzeichnungsflüssigkeiten für aus Ink-Jet-Verfahren, enthaltend 6 bis 20 Gew.-Teile, vorzugsweise 9 bis 14 Gew.-Teile, der oben näher bezeichneten Farbstoffpräparation, 5 bis 20 Gew. -Teile, vorzugsweise 8 bis 15 Gew.-Teile, eines wassermischbaren Verdünnungsmittels sowie 75 bis 105 Gew.-Teile, vorzugsweise 80 bis 100 Gew.-Teile, Wasser.

Wassermischbare Verdünnungsmittel sind insbesondere organische Verdünnungsmittel, beispielsweise C₁-C₄-Alkanole, wie Methanol, Ethanol, Propanol, Isopropanol, Butanol, Isobutanol, sec-Butanol oder tert-Butanol, Carbonsäureamide, wie N,N-Dimethylformamid oder N,N-Dimethylacetamid, Lactame, wie N-Methylpyrrolidon, cyclische Harnstoffe, wie 1,3-Dimethylimidazolidin-2-on, Ketone oder Ketoalkohole, wie Aceton, Methylethylketon oder 2-Methyl-2-hydroxypentan-4-on, Ether, wie Tetrahydrofuran oder Dioxan, Mono-, Oligo- oder Polyalkylenglykole oder -thioglykole, die C₂-C₆-Alkyleneinheiten aufweisen, wie Ethylenglykol, 1,2- oder 1,3-Propylenglykol, 1,2- oder 1,4-Butylenglykol, 1,5-Pentylenglykol, 1,6-Hexylenglykol, Diethylenglykol, Triethylenglykol, Tetraethylenglykol, Thiodiglykol, Polyethylenglykol oder Polypropylenglykol, andere Polyole, wie Glycerin oder Hexan-1,2,6-triol, C₁-C₄-Alkylether von mehrwertigen Alkoholen, insbesondere von Mono- oder Oligoglykolen, wie die Mono- oder Dimethyl- oder Mono- oder Diethylether von Ethylenglykol, Diethylenglykol, Triethylenglykol oder Tetraethylenglykol, oder Dimethylsulfoxid.

Wassermischbare Verdünnungsmittel, die bevorzugt sind, sind N-Methylpyrrolidon, Mono-, Di- oder Trialkylenglykole, die C₂-C₆-Alkyleneinheiten aufweisen, insbesondere Mono-, Di- oder Triethylenglykol, oder Dimethylsulfoxid.

Die neuen Aufzeichnungsflüssigkeiten können weiterhin Hilfsmittel, beispielsweise Mittel zur Beeinflussung der Viskosität, wie Polyvinylchlorid oder Cellulosederivate, Tenside (nichtionisch, anionisch oder kationisch) oder Puffersysteme enthalten.

Die neuen Aufzeichnungsflüssigkeiten, enthaltend die erfindungsgemäßen Farbstoffpräparationen, ergeben bei ihrer Anwendung Drucke in Magentatönen, die sich durch eine hohe Wasserechtheit auszeichnen.

Die folgenden Beispiele sollen die Erfindung näher erläutern.

### A) Herstellung der Farbstoffpräparationen

### Beispiel 1

90,7 Gew.-Teile des Farbstoffs der Formel I, 5,1 Gew.-Teile des Farbstoffs der Formel II und 4,2 Gew.-Teile Polyethylenimin mit einem mittleren Molekulargewicht von 20.000 bis 25.000 wurden gemischt.

### Beispiel 2

83,6 Gew.-Teile des Farbstoffs der Formel I, 4,7 Gew.-Teile des Farbstoffs der Formel II und 11,7 Gew.-Teile Polyethylenimin mit einem mittleren Molekulargewicht von ca. 2.000 wurden gemischt.

### B) Herstellung der Aufzeichnungsflüssigkeiten

### Beispiel 3

10 Gew.-Teile der Farbstoffpräparation aus Beispiel 1, 10 Gew.-Teile N-Methylpyrrolidon und 80 Gew.-Teile Wasser wurden unter Rühren gemischt.

### Beispiel 4

10 Gew.-Teile der Farbstoffpräparation aus Beispiel 2, 10 Gew.-Teile N-Methylpyrrolidon und 80 Gew.-Teile Wasser wurden unter Rühren gemischt.

In beiden Fällen erhält man eine Aufzeichnungsflüssigkeit, die bei ihrer Anwendung im Ink-Jet-Verfahren Drucke mit guten anwendungstechnischen Eigenschaften, insbesondere mit guter Wasserechtheit, ergeben.

## Patentansprüche

1. Farbstoffpräparationen, enthaltend mindestens einen roten Reaktivfarbstoff, mindestens einen blauen Reaktivfarbstoff sowie Polyethylenimin mit einem mittleren Molekulargewicht von 1.000 bis 10.000.000.

2. Farbstoffpräparationen nach Anspruch 1, enthaltend 80 bis 96 Gew.-Teile mindestens eines roten Reaktivfarbstoffs, 3 bis 8 Gew.-Teile mindestens eines blauen Reaktivfarbstoffs sowie 1 bis 30 Gew.-Teile Polyethylenimin.

3. Farbstoffpräparationen nach den Ansprüchen 1 und 2, enthaltend mindestens einen roten Reaktivfarbstoff aus der Reihe der Azofarbstoffe und mindestens einen blauen Reaktivfarbstoff aus der Reihe der Anthrachinonfarbstoffe.

4. Farbstoffpräparationen nach den Ansprüchen 1 bis 3, enthaltend den Farbstoff der Formel I

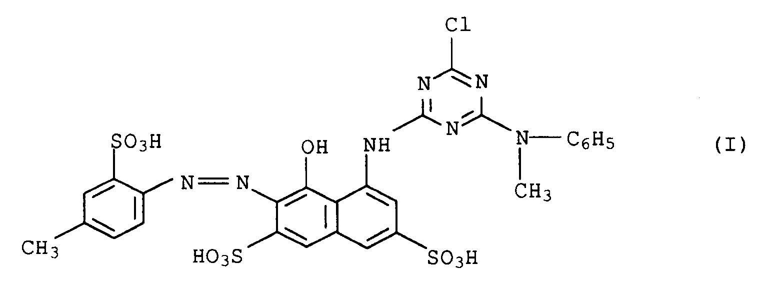

5. Farbstoffpräparationen nach den Ansprüchen 1 bis 4, enthaltend den Farbstoff der Formel II

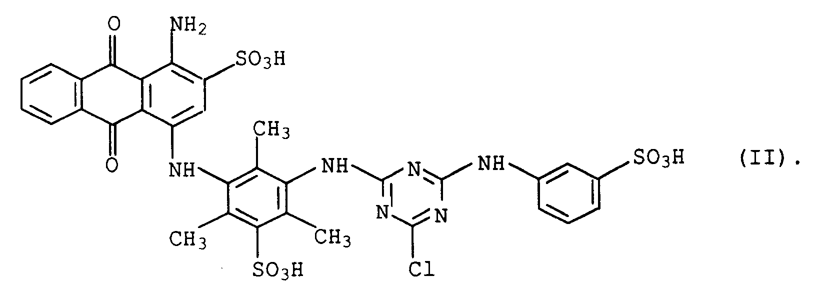

6. Farbstoffpräparationen nach den Ansprüchen 1 bis 5, enthaltend 84 bis 94 Gew.-Teile des Farbstoffs der Formel I, 3,5 bis 6 Gew.-Teile des Farbstoffs der Formel II sowie 2 bis 20 Gew.-Teile Polyethylenimin.

7. Farbstoffpräparationen nach den Ansprüchen 1 bis 6, enthaltend Polyethylenimin mit einem mittleren Molekuargewicht von 1.500 bis 3.000.

8. Farbstoffpräparationen nach den Ansprüchen 1 bis 6, enthaltend Polyethylenimin mit einem mittleren Molekulargewicht von 600.000 bis 1.000.000.

9. Farbstoffpräparationen nach den Ansprüchen 1 bis 6, enthaltend Polyethylenimin mit einem mittleren Molekulargewicht von 20.000 bis 25.000.

10. Verwendung der Farbstoffpräparationen gemäß Anspruch 1 zur Herstellung von Aufzeichnungsflüssigkeiten für das Ink-Jet-Verfahren.

11. Aufzeichnungsflüssigkeiten für das Ink-Jet-Verfahren, enthaltend 6 bis 20 Gew.-Teile einer Farbstoffpräparation gemäß Anspruch 1, 5 bis 20 Gew.-Teile eines wassermischbaren Verdünnungsmittels sowie 75 bis 105 Gew.-Teile Wasser.
